# EUROPÄISCHE PATENTSCHRIFT

(11) **EP 0 608 869 B1**
(45) Veröffentlichungstag und Bekanntmachung des Hinweises auf die Patenterteilung: **09.04.1997**
(21) Anmeldenummer: 94101141.3
(22) Anmeldetag: 27.01.1994
(51) Int. Cl.: E05F 15/00

(54) **Schutzkontaktvorrichtung für Schliesskanten**
Safety contact device for closure edge
Dispositif à contact de sécurité pour bord de fermeture

(30) Priorität: 29.01.1993 DE 9301259 U
(43) Veröffentlichungstag der Anmeldung: 03.08.1994
(73) Patentinhaber: ROLLADENWERK GEBR. EFFERTZ GMBH, D-41238 Mönchengladbach (DE)
(72) Erfinder: Koch, Hubert,, D-41844 Wegberg (DE)
(74) Vertreter: Stenger, Watzke & Ring Patentanwälte

(56) Entgegenhaltungen:
- US-A- 3 619 946
- US-A- 3 903 647

## Beschreibung

Die Erfindung betrifft eine Schutzkontaktvorrichtung für Schließkanten, insbesondere für Schließkanten an Rolltoren oder Schnellauftoren, die in Führungen laufen, mit einer Kontaktvorrichtung in wenigstens einer der Führungen und einer zusätzlich an der Schließkante zur Betätigung der Kontaktvorrichtung angeordneten Betätigungsvorrichtung.

Automatisch schließende und mit Motorkraft bewegte Vorrichtungen, wie beispielsweise Fahrstuhltüren, Rolltore oder Schnellauftore bilden mit ihrer Schließkante eine potentielle Gefahrenquelle für Personen oder Gegenstände, die sich im Schließbereich befinden, sowie für den Antriebsmechanismus der Schließvorrichtung, wenn die Antriebssteuerung eine volle Motorkraft gegen einen Gegenstand im Schließbereich wirken läßt, da die Schließposition nicht erreicht wird.

Ein automatisch schließendes Tor, das ein Hindernis im Schließbereich nicht erkennt, drückt mit der Motorkraft beispielsweise gegen eine Person, die unbeabsichtigterweise an der Schließkante eingeklemmt ist, was zu schweren Verletzungen führen kann.

Um solche Unfälle zu vermeiden, werden zwei grundsätzliche Wege beschritten. Ein Weg besteht darin, die Motorkraft auf die Schließvorrichtung z.B. mittels einer Durchrutschkupplung so zu begrenzen, daß eine Verletzungsgefahr ausgeschlossen werden kann. Dies erfolgt z.B. bei elektrischen Fensterhebern in Kraftfahrzeugen. Dies hat jedoch den Nachteil, daß die Schließvorrichtung kein großes Gewicht haben darf. Beispielsweise bei Schnellauftoren verhindert das Gewicht des Tores bereits eine derartige Technilk.

Ein weiterer Weg besteht darin, an der Schließkante Sensoren anzuordnen, die bei Berührung mit einem Gegenstand einen Kontakt auslösen und die motorische Schließkraft abschalten. Dazu wird eine elektrische Verbindung zwischen den Sensoren und der Motorsteuerung benötigt, die im allgemeinen mit einem elektrisch leitenden Kabel realisiert ist.

Da die Schließkante im Betrieb beim Öffnen und Schließen immer hin und her bewegt wird, ist es notwendig, das Kabel entsprechend nachzuführen. Dies wird beispielsweise durch ein Spiralkabel oder eine sich auf- und abrollende Kabeltrommel realisiert. Das Kabel steht dabei im Betrieb unter ständiger mechanischer Belastung, was auf Dauer zu einer Beschädigung des Kabels und somit u.U. zu einer Fehlfunktion des Schutzmechanismus führen kann.

Die US-A-3 903 647 offenbart eine gattungsgemäße Schutzkontaktvorrichtung für Schließkanten an Rolltoren oder Schnellauftoren mit einer Kontakt- und einer Bestätigungsvorrichtung. Die Betätigungsvorrichtung weist eine vor der Schließkante angeordnete Kontaktkante auf, die parallel zur Schließkante bewegbar ist. An der Kontaktkante angeordnete Führungsmechanismen sorgen dafür, daß die bei Auftreffen auf ein Hindernis sich relativ zur Schließkante verschiebende Kontaktkante gleichzeitig nach oben verschoben wird. Auf der Seite der Kontaktvorrichtung ist an der Bestätigungskante ein quer zu dieser bewegbarer Betätigungsstift angeordnet, der an einer Kontaktleiste anliegt, die einen Schutzkontakt öffnet oder schließt. Durch den Schutzkontakt wird die Antriebsvorrichtung des Tores ein- bzw. ausgeschaltet.

Der Erfindung liegt die **Aufgabe** zugrunde, eine Schutzkontaktvorrichtung zur Verfügung zu stellen, die mit technisch einfachen Mitteln stets einen verschleißfesten und sicheren Schutzmechanismus gewährleistet.

Die Aufgabe wird bei einer Schutzkontaktvorrichtung der Eingangs genannten Art erfindungsgemäß dadurch gelöst, daß die Betätigungsvorrichtung aus senkrecht zur Schließkante angeordneten Betätigungsstiften und einer parallel zur Schließkante angeordneten Betätigungsstange besteht, wobei die Betätigungsstange über die Betätigungsstifte in einer zur Schließkante parallelen Richtung bewegbar ist.

Diese Aufgabe wird ebenfalls bei einer Schutzkontaktvorrichtung der Eingangs gennanten Art erfindungsgemäß durch die Merkmale des Oberbegriffes des Anspruchs 3 gelöst.

Da die Kontaktvorrichtung nun unbeweglich angeordnet werden kann, sind keine nachgeführten Kabel mehr nötig, wodurch eine wesentliche Störungsquelle im Betrieb beispielsweise eines Schnellauftores beseitigt wird.

Eine Betätigungsvorrichtung bestehend aus senkrecht zur Schließkante angeordneten Betätigungsstiften und einer parallel zur Schließkante angeordneten Betätigungsstange, wobei die Betätigungsstange über die Betätigungsstifte eine zur Schließkante parallelen Richtung bewegbar ist, ermöglicht in besonders vorteilhafter Weise die Verwendung eines mechanisch betriebenen Sensors zur Detektion von Hindernissen im Schließbereich. Dabei kann geeigneterweise ein Umlenkmechanismus die Bewegung der Betätigungsstifte in eine Bewegung der Betätigungsstange umsetzen, gemäß einem weiteren Vorschlag der Erfindung auch in eine Drehbewegung.

Besonders vorteilhaft, da besonders einfach realisierbar, sind beispielsweise keilförmige Ausnehmungen in der Betätigungsstange, in die die Betätigungsstifte eingreifen, wobei die Betätigungsstifte rechtwinklig zur Betätigungsstange angeordnet sind.

Ein Schlauchkontakt entlang einer der seitlichen Führungen, der so angeordnet ist, daß eine Betätigungsrolle, die an der Betätigungsstange angeordnet ist, bei Bewegung der Betätigungsstange auf den Schlauchkontakt drückt, ergibt eine vorteilhafte Ausführungsform, die durch ihre besonders einfache Mechanik sehr sicher und kostengünstig ist.

In einer weiteren vorteilhaften Ausführungsform ist der Schlauchkontakt durch eine Lichtschranke ersetzt, in die eine, an der Betätigungsstange angeordnete Lichtunterbrechungsvorrichtung, vorzugsweise als eine Platte ausgebildet, bei Bewegung der Betätigungsstange eingreift und den Strahlengang unterbricht. Eine hierdurch zusätzlich eingesparte Kopplungsmechanik macht den Mechanismus besonders sicher. Weiterhin wird dadurch ein schnelleres Ansprechen auf die Detektion eines Hindernisses erreicht.

Eine seitlich in den Führungen mittels Laufrädern und wenigstens einer Feder geführte Schließkante hat einen immer gleichbleibenden Abstand zu den seitlichen Führungen, wodurch eine Auslösung des Stoppmechanismus aufgrund einer zufälligen seitlichen Bewegung der Schließkante verhindert wird.

Betätigungsstifte, die an den der Betätigungsstange abgewandten Enden mit einer gummibewehrten Leiste verbunden sind, gewährleisten eine lückenlose Detektion von Hindernissen im Schließbereich und verhindern, daß eventuelle Verletzungen von Personen schon beim Auslösen des Stoppmechanismus auftreten.

Weitere Vorteile und Merkmale der Erfindung ergeben sich aus der folgenden Beschreibung zweier Ausführungsformen sowie aus den Zeichnungen, auf die bezug genommen wird. Darin zeigt:
- Fig. 1: eine Aufsicht auf eine Schließkante zwischen seitlichen Führungen mit einer Schutzkontaktvorrichtung,
- Fig. 2: eine Teilansicht der Schutzkontaktvorrichtung in Fig. 1 in betätigtem Zustand,
- Fig. 3: eine Schnittansicht entlang der Linie III-III in Fig. 1 und
- Fig. 4: eine weitere Schnittansicht entlang der Linie III-III in Fig. 1.

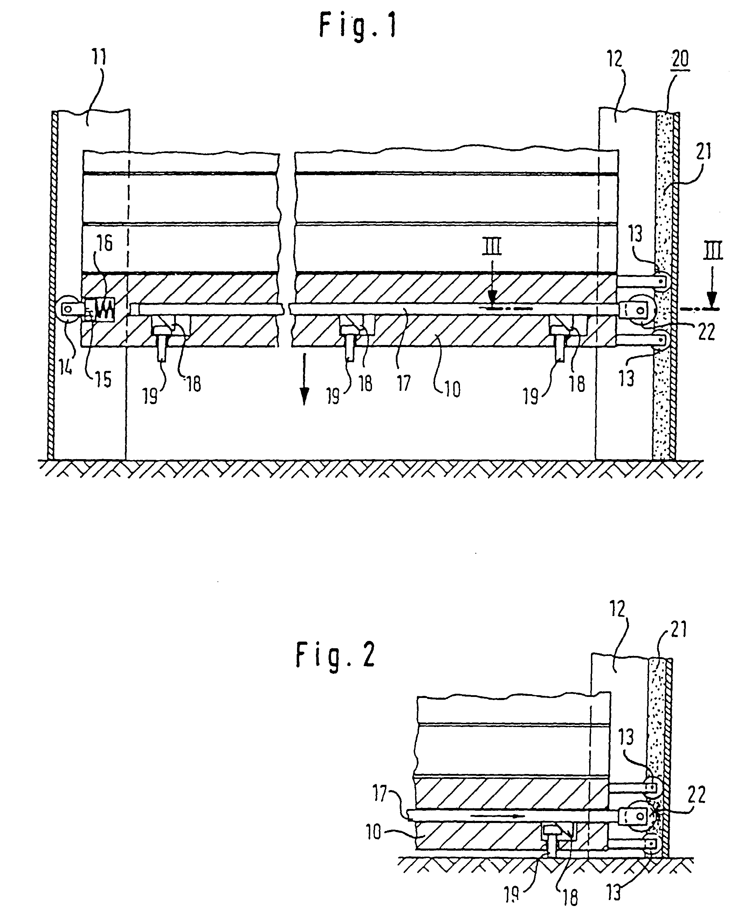

Fig. 1 zeigt eine Aufsicht auf eine Schließkante 10, die zwischen seitlichen Führungen 11 und 12 mittels festen Laufrollen 13 auf einer Seite 12 und einem Laufrad 14 in einer Halterung 15 und einer Feder 16 auf der gegenüberliegenden Seite 11 geführt wird. Eine Betätigungsstange 17 verläuft quer durch die Schließkante 10 mit an ihr über Umlenkmechanismen 18 angeordneten Betätigungsstiften 19.

Trifft nun bei der Bewegung der Schließkante 10 ein Betätigungsstift 19 auf ein Hindernis, so wird dieser aus seiner Position relativ zur Schließkante 10 verschoben. Diese Bewegung des Betätigungsstiftes 19 wird von dem Umlenkmechanismus 18 in eine Bewegung der Betätigungsstange 17 in ihre axiale Richtung umgesetzt. Die Achse der Betätigungsstange 17 ist auf die seitlichen Führungen 11 und 12 gerichtet, so daß eine axiale Bewegung der Betätigungsstange 17 parallel zur Schließkante 10 diese auf die entsprechende seitliche Führung 12 zu bewegt.

Der Kontaktmechanismus 20 ist bei dieser Ausführungsform starr innerhalb der seitlichen Führung 12 als Schlauchkontakt 21 angeordnet, so daß keine nachgeführten Kabel, die zum Anschluß an eine Motorsteuerung dienen, notwendig sind. Vielmehr können auch die Anschlußkabel (nicht darstellt) starr angeordnet werden. Weiterhin ist der Schlauchkontakt 21 keinen dynamischen Belastungen ausgesetzt, die beispielsweise zu Ermüdungsbrüchen im Kontaktmaterial führen und einen sicheren Betrieb nicht gewährleisten könnten.

Für den Umlenkmechanismus 18 sind auch viele andere Anordnungen denkbar, z.B. über Hebel oder Schneckengetriebe.

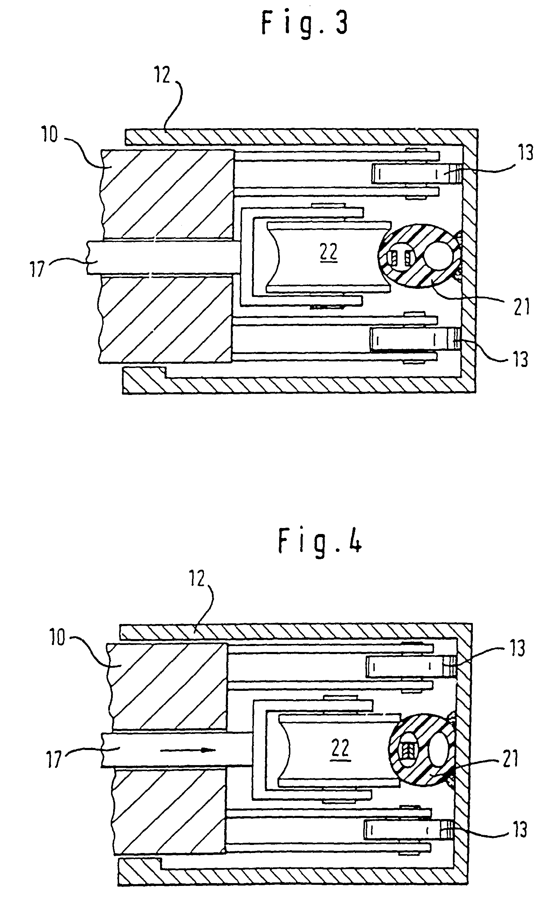

In Fig. 3 ist eine Schnittansicht entlang der Linie III-III in Fig. 1 dargestellt. Innerhalb der seitlichen Führung 11 und 12 ist ein Kontaktschlauch 21 angeordnet. Die sich wie oben erläutert bewegende Betätigungsstange 17 schiebt sich in Richtung der seitlichen Führung 12 und drückt mit einer Betätigungsrolle 22 auf den Kontaktschlauch 21. Dies löst einen Kontakt aus, der, an eine Motorsteuerung weitergeleitet, den Schließvorgang stoppt. Fig. 2 zeigt in einer Teilansicht der Fig. 1 den Zustand, in dem die Betätigungsstange 17 verschoben ist und mit der Betätigungsrolle 22 auf den Kontaktschlauch 21 drückt.

Auf der Seite des Schlauchkontaktes 21 ist die Schließkante 10 mit festen Laufrollen 13 in der seitlichen Führung 12 geführt. Auf der gegen-überliegenden Seite ist ein Laufrad 14 mit einer Halterung 15 und einer Feder 16 angeordnet. Der Federdruck in der Halterung 15 und das in der Halterung 15 bewegliche Laufrad 14 ermöglichen einen konstanten Abstand der Schließkantenenden von den seitlichen Führungen 11 und 12.

Fig. 4 zeigt eine zweite Schnittansicht entlang der Linie III-III in Fig. 1. Diese illustriert den Zustand, in dem die Schutzkontaktvorrichtung betätigt ist und ein Kontakt im Schlauchkontakt 21 durch die andrückende Betätigungsrolle 22 ausgelöst wird.

In einer weiteren, nicht dargestellten Ausführungsform, wird als Kontaktvorrichtung 21 eine Lichtschranke verwendet. Bei Bewegung der Betätigungsstange 17 schiebt sich eine entsprechend an ihr befestigte Lichtunterbrechungsvorrichtung in einen Strahlengang der Lichtschranke, unterbricht den Strahlengang und erzeugt somit wiederum einen Kontakt, der, weitergeleitet an die Motorsteuerung, zu einem Anhalten der Schließbewegung führt.

Diese Kontaktart ermöglicht ein schnelleres und sicheres Ansprechen der Motorsteuerung auf eine Bewegung der Betätigungsstifte 19, da eine mechanische Kopplung zwischen Betätigungsstange 17 und Kontaktvorrichtung 20 nicht notwendig ist. Weiterhin gewährt eine Lichtschranke zusätzliche Sicherheit, da ein Ausfallen der Lichtquelle zum sofortigen Stoppen des Tores führt und nicht zu einem Ausfall des Schutzmechanismus, wie dies beispielsweise bei beschädigten Anschlußkabeln der Fall sein kann.

Für den Kontaktmechanismus 20 sind auch andere Ausführungsformen denkbar, wie z.B. ein Spiegel an der Betätigungsstange 17, der, statt einen Strahlengang zu unterbrechen, erst einen Strahlengang ermöglicht und so einen Kontakt herstellt, oder ein Kontaktseil, das ausgelenkt von der Betätigungsstange 17 an einem mechanischen Kontakt zieht, analog einer Notbremse. Diese Anordnung könnte dann beispielsweise auch manuell von einer Person im Gefahrenbereich der Schließkante betätigt werden.

## Patentansprüche

1. Schutzkontaktvorrichtung für Schließkanten (10), insbesondere für Schließkanten (10) an Rolltoren oder Schnellauftoren, die in Führungen (11, 12) laufen, mit einer Kontaktvorrichtung (20) in wenigstens einer der Führungen (11, 12) und einer zusätzlich an der Schließkante (10) zur Betätigung der Kontaktvorrichtung (20) angeordneten Betätigungsvorrichtung,
**dadurch gekennzeichnet**,
daß die Betätigungsvorrichtung aus senkrecht zur Schließkante (10) angeordneten Betätigungsstiften (19) und einer parallel zur Schließkante (10) angeordneten Betätigungsstange (17) besteht, wobei die Betätigungsstange (17) über die Betätigungsstifte (19) in einer zur Schließkante (10) parallelen Richtung bewegbar ist.

2. Schutzkontaktvorrichtung nach Anspruch 1, dadurch gekennzeichnet, daß zwischen den Betätigungsstiften (19) und der Betätigungsstange (17) ein Umlenkmechanismus (18) angeordnet ist, zur Umsetzung der Bewegung der Betätigungsstifte (19) in eine Bewegung der Betätigungsstange (17) in Richtung ihrer Längsachse.

3. Schutzkontaktvorrichtung für Schließkanten (10), insbesondere für Schließkanten (10) an Rolltoren oder Schnellauftoren, die in Führungen (11, 12) laufen, mit einer Kontaktvorrichtung (20) in wenigstens einer der Führungen (11, 12) und einer zusätzlich an der Schließkante (10) zur Betätigung der Kontaktvorrichtung (20) angeordneten Betätigungsvorrichtung, dadurch gekennzeichnet, daß die Betätigungsvorrichtung aus senkrecht zur Schließkante (10) angeordneten Betätigungsstiften (19) und einer parallel zur Schließkante (10) angeordneten Betätigungsstange (17) besteht und zwischen den Betätigungsstiften (19) und der Betätigungsstange (17) ein Umlenkmechanismus (18) angeordnet ist, wobei über die Betätigungsstifte (19) und den Umlenkmechanismus (18) die Betätigungsstange (17) um ihre Längsachse gedreht wird.

4. Schutzkontaktvorrichtung nach Anspruch 2, dadurch gekennzeichnet, daß der Umlenkmechanismus (18) aus keilförmigen Ausnehmungen in der Betätigungsstange (17) besteht, in die die Betätigungsstifte (19) greifen.

5. Schutzkontaktvorrichtung nach einem der Ansprüche 1 bis 4, dadurch gekennzeichnet, daß die Kontaktvorrichtung (20) ein Schlauchkontakt (21) ist, der entlang einer seitlichen Führung (12) derart angeordnet ist, daß ein Ende der Betätigungsstange (17) bei ihrer Bewegung auf den Schlauchkontakt (21) drückt.

6. Schutzkontaktvorrichtung nach Anspruch 5, dadurch gekennzeichnet, daß an einem Ende der Betätigungsstange (17), das dem Schlauchkontakt (21) zugewandt ist, eine Betätigungsrolle (22) angeordnet ist.

7. Schutzkontaktvorrichtung nach einem der Ansprüche 1 bis 4, dadurch gekennzeichnet, daß die Kontaktvorrichtung (20) eine Lichtschranke ist.

8. Schutzkontaktvorrichtung nach Anspruch 7, dadurch gekennzeichnet, daß an einem Ende der Betätigungsstange (17), das der Lichtschranke zugewandt ist, eine Lichtunterbrechungsvorrichtung angeordnet ist.

9. Schutzkontaktvorrichtung nach Anspruch 8, dadurch gekennzeichnet, daß die Lichtunterbrechungsvorrichtung als eine Platte ausgeführt ist, die sich mit der Bewegung der Betätigungsstange (17) in den Strahlengang der Lichtschranke schiebt oder dreht und den Strahlengang unterbricht.

10. Schutzkontaktvorrichtung nach einem der vorstehenden Ansprüche, dadurch gekennzeichnet, daß die Schließkante (10) an den seitlichen Enden mittels Laufrädern (13, 14) und wenigstens einer Feder in den seitlichen Führungen (11, 12) gelagert ist.

11. Schutzkontaktvorrichtung nach einem der vorstehenden Ansprüche, dadurch gekennzeichnet, daß die Betätigungsstifte (19) an den, der Betätigungsstange (17) abgewandten Enden, mit einer gummibewährten Leiste verbunden sind.

12. Schutzkontaktvorrichtung nach einem der Ansprüche 1 bis 4, dadurch gekennzeichnet, daß die Kontaktvorrichtung eine elektrische Vorrichtung ist.

13. Schutzkontaktvorrichtung nach einem der Ansprüche 1 bis 4, dadurch gekennzeichnet, daß die Kontaktvorrichtung (20) ein kapazitiv wirkender Kontakt oder ein induktiv wirkender Kontakt oder ein magnetischer Kontakt oder ein Zug- oder Druckschalter ist.

## Claims

1. Protective contact device for closing edges (10), especially for closing edges (10) on sliding doors or high-speed gates which run in guides (11, 12), having a contact device (20) in at least one of the guides (11, 12) and an actuating device arranged additionally on the closing edge (10) for actuating the contact device (20),
characterised in that
the actuating device consists of actuating pins (19) arranged at right angles to the closing edge (10) and an actuating bar (17) arranged parallel to the closing edge (10), wherein the actuating bar (17) can be moved via the actuating pins (19) in a direction parallel to the closing edge (10).

2. Protective contact device according to Claim 1, characterised in that a deflecting mechanism (18) is arranged between the actuating pins (19) and the actuating bar (17) for converting the movement of the actuating pins into a movement of the actuating bar (17) in the direction of its longitudinal axis.

3. Protective contact device for closing edges (10), especially for closing edges (10) on sliding doors or high-speed gates which run in guides (11, 12), having a contact device (20) in at least one of the guides (11, 12) and an actuating device arranged additionally on the closing edge (10) for actuating the contact device (20),
characterised in that
the actuating device consists of actuating pins (19) arranged at right angles to the closing edge (10) and an actuating bar (17) arranged parallel to the closing edge (10) and a deflecting mechanism (18) is arranged between the actuating pins (19) and the actuating bar (17), wherein via the actuating pins (19) and the deflecting mechanism (18) the actuating bar (17) is rotated about its longitudinal axis.

4. Protective contact device according to Claim 2, characterised in that the deflecting mechanism (18) consists of wedge-shaped recesses in the actuating bar (17) in which the actuating pins (19) engage.

5. Protective contact device according to one of Claims 1 to 4, characterised in that the contact device (20) is a flexible tube contact (21) which is arranged along a lateral guide (12) in such a way that during its movement an end of the actuating bar (17) presses on the flexible tube contact (21).

6. Protective contact device according to Claim 5, characterised in that at an end of the actuating bar (17), which is facing towards the flexible tube contact (21), an actuating roller (22) is arranged.

7. Protective contact device according to one of Claims 1 to 4, characterised in that the contact device (20) is a light barrier.

8. Protective contact device according to Claim 7, characterised in that at an end of the actuating bar (17), which is facing towards the light barrier, a light interruption device is arranged.

9. Protective contact device according to Claim 8, characterised in that the light interruption device is constructed as a plate which is pushed or turned with the movement of the actuating bar (17) into the beam path of the light barrier and interrupts the beam path.

10. Protective contact device according to any of the preceding claims, characterised in that the closing edge (10) is provided with running wheels (13,14) and at least one spring arranged in the sides guides (11, 12).

11. Protective contact device according to any of the preceding claims, characterised in that the actuating pins (19) are connected to the remote end of the actuating bar (17) with a rubber protecting strip.

12. Protective contact device according to any one of claims 1 to 4, characterised in that the contact device is an electrical contact device.

13. Protective contact device according to any one of claims 1 to 4, characterised in that the contact device (20) is a captive working contact or an inductive working contact or a magnetic contact or a pull or push switch.

## Revendications

1. Dispositif à contact de sécurité pour bords de fermeture (10), en particulier pour bords de fermeture (10) de portes roulantes ou de portes à levée rapide qui coulissent dans des moyens de guidage (11, 12), comprenant un dispositif de contact (20) disposé dans au moins l'un des moyens de guidage (11, 12) et comprenant un dispositif d'actionnement monté à titre supplémentaire sur le bord de fermeture (10) pour actionner le dispositif de contact (20), caractérisé en ce que le dispositif d'actionnement se compose de tiges d'actionnement (19) disposées perpendiculairement au bord de fermeture (10) et d'une barre d'actionnement (17) disposée parallèlement au bord de fermeture (10), la barre d'actionnement (17) pouvant être déplacée par les tiges d'actionnement (19) dans une direction parallèle au bord de fermeture (10).

2. Dispositif à contact de sécurité selon la revendication 1, caractérisé en ce que, entre les tiges d'actionnement (19) et la barre d'actionnement (17), est disposé un mécanisme de déviation (18) pour transformer le déplacement des tiges d'actionnement (19) en un déplacement de la barre d'actionnement (17) dans le sens de son axe longitudinal.

3. Dispositif à contact de sécurité pour bords de fermeture (10), en particulier pour bords de fermeture de portes roulantes ou de portes à levée rapide qui coulissent dans des moyens de guidage (11, 12), comprenant un dispositif de contact (20) disposé dans au moins l'un des moyens de guidage (11, 12) et comprenant un dispositif d'actionnement monté à titre supplémentaire sur le bord de fermeture (10) pour actionner le dispositif de contact (20), caractérisé en ce que le dispositif d'actionnement se compose de tiges d'actionnement (19) disposées perpendiculairement au bord de fermeture (10) et d'une barre d'actionnement (17) disposée parallèlement au bord de fermeture (10), et entre les tiges d'actionnement (19) et la barre d'actionnement (17) est disposé un mécanisme de déviation (18), la barre d'actionnement (17) étant mise en rotation autour de son axe longitudinal par les tiges d'actionnement (19) et par le mécanisme de déviation (18).

4. Dispositif à contact de sécurité selon la revendication 2, caractérisé en ce que le mécanisme de déviation (18) se compose d'évidements cunéiformes qui sont ménagés dans la barre d'actionnement (17) et dans lesquels s'engagent les tiges d'actionnement (19).

5. Dispositif à contact de sécurité selon l'une des revendications 1 à 4, caractérisé en ce que le dispositif de contact (20) est un contact sous gaine souple (21) qui est disposé le long d'un moyen de guidage latéral (12), de façon que l'une des extrémités de la barre d'actionnement (17) comprime le contact sous gaine souple (21) lors de son déplacement.

6. Dispositif à contact de sécurité selon la revendication 5, caractérisé en ce qu'un galet d'actionnement (22) est monté à l'extrémité de la barre d'actionnement (17) qui fait face au contact sous gaine souple (21).

7. Dispositif à contact de sécurité selon l'une des revendications 1 à 4, caractérisé en ce que le dispositif de contact (20) est un barrage photo-électrique.

8. Dispositif à contact de sécurité selon la revendication 7, caractérisé en ce qu'un dispositif d'interruption de lumière est disposé à l'extrémité de la barre d'actionnement (17) qui fait face au barrage photo-électrique.

9. Dispositif à contact de sécurité selon la revendication 8, caractérisé en ce que le dispositif d'interruption de lumière est conçu sous la forme d'une plaque qui, en coulissant ou en pivotant, se place sur la marche du rayon du barrage photo-électrique lors du déplacement de la barre d'actionnement (17) et interrompt ladite marche.

10. Dispositif à contact de sécurité selon l'une des revendications précédentes, caractérisé en ce qu'au niveau de ses extrémités latérales le bord de fermeture (10) prend appui dans les moyens de guidage latéraux (11, 12) par l'intermédiaire de roues de déplacement (13, 14) et d'au moins un ressort.

11. Dispositif à contact de sécurité selon l'une des revendications précédentes, caractérisé en ce qu'à leurs extrémités opposées à la barre d'actionnement (17) les tiges d'actionnement (19) sont reliées à une barrette garnie de caoutchouc.

12. Dispositif à contact de sécurité selon l'une des revendications 1 à 4, caractérisé en ce que le dispositif de contact est un dispositif électrique.

13. Dispositif à contact de sécurité selon l'une des revendications 1 à 4, caractérisé en ce que le dispositif de contact (20) est un contact à effet capacitif, un contact à effet inductif, un contact magnétique ou un interrupteur à tirette ou à poussoir.
